# EUROPÄISCHE PATENTSCHRIFT

(11) **EP 2 935 131 B1**
(45) Veröffentlichungstag und Bekanntmachung des Hinweises auf die Patenterteilung: **23.11.2016**
(21) Anmeldenummer: 13815697.1
(22) Anmeldetag: 05.12.2013
(51) Int. Cl.: C02F 11/12, C05F 17/02, F26B 9/10, F26B 25/04

(54) **VORRICHTUNG ZUM WENDEN, MISCHEN UND TRANSPORTIEREN VON ZU TROCKNENDEM, TEILGETROCKNETEM ODER GETROCKNETEM GUT**
DEVICE FOR TURNING, MIXING AND TRANSPORTING MATERIAL TO BE DRIED, PARTIALLY DRIED MATERIAL OR DRIED MATERIAL
DISPOSITIF SERVANT À RETOURNER, MÉLANGER ET TRANSPORTER UN PRODUIT À SÉCHER, PARTIELLEMENT SÉCHÉ OU SÉCHÉ

(30) Priorität: 21.12.2012 DE 102012224322
(43) Veröffentlichungstag der Anmeldung: 28.10.2015
(73) Patentinhaber: TSP GmbH, 70794 Filderstadt-Bernhausen (DE)
(72) Erfinder: BUX, Markus, 72124 Pliezhausen (DE); RITTERBUSCH, Steffen, 70563 Stuttgart (DE); CONRAD, Tilo, 72622 Nürtingen (DE)
(74) Vertreter: Dr. Gassner & Partner mbB
(86) Internationale Anmeldenummer: PCT/EP2013/075658
(87) Internationale Veröffentlichungsnummer: WO 2014/095390

(56) Entgegenhaltungen:
- EP-A1- 0 021 064
- EP-A1- 0 768 286
- EP-A1- 1 621 522
- WO-A1-02/08153
- CN-A- 102 674 925
- DE-A1- 10 336 685

## Beschreibung

Die Erfindung betrifft eine Vorrichtung zum Wenden, Mischen und Transportieren von zu trocknendem, teilgetrocknetem oder getrocknetem Gut in einer Trocknungsanlage, in welcher das Gut zum Trocknen auf einem Boden ausgebracht und ausgebreitet wird. Bei dem Gut kann es sich um Schlamm, insbesondere Klärschlamm, handeln. Die Vorrichtung weist dabei eine parallel oder im Wesentlichen parallel zum Boden ausgerichtete drehbare Achse auf, um die herum und längs der Achse Schaufeln angeordnet sind, so dass die Schaufeln bei einem Drehen der Achse in einem Umkreis um die Achse herum bewegt werden. Bei dem Mischen handelt es sich insbesondere um ein Rückmischen von getrocknetem oder teilgetrocknetem Gut mit noch feuchterem Gut, um den Trockensubstanzgehalt des feuchteren Guts zu erhöhen und damit dessen Klebrigkeit zu verringern.

Die DE 298 14 380 U1 offenbart eine Vorrichtung zum Trocknen von Schlamm und/oder von den Inhaltsstoffen verschmutzter Flüssigkeiten mit Hilfe von Solarstrahlung innerhalb eines im Wesentlichen abgeschlossenen Trocknungsraums. Dabei wird das zu trocknende Gut in einen nach oben offenen Behälter eingebracht und darin mittels eines in den Behälter eingreifenden Wendegeräts mit Wendeschaufeln umgewälzt. Es können mehrere Wendegeräte vorgesehen sein, deren Wirkbereiche sich berühren oder überlagern. Das Wendegerät kann jedoch auch quer zur Orientierung seiner Wendeschaufeln aufweisenden horizontalen Drehachse hin- und herbewegbar sein.

Aus der DE 10 2004 037 209 A1 ist eine Wendevorrichtung bekannt. Dabei ist unmittelbar außerhalb des Umkreises und im Wesentlichen oberhalb einer Schicht des zu trocknenden Feuchtguts eine Rückhaltevorrichtung für das Feuchtgut angeordnet, die mit einer Schaufel dieser Vorrichtung zusammenwirkt. Die Schaufel kann im Querschnitt einem halbkreisähnlichen Polygonzug entsprechen. Die Rückhaltevorrichtung wirkt mit der Schaufel zusammen und ermöglicht ein besonders leichtes Aufnehmen des Feuchtguts, insbesondere auch von Konglomeraten, auf die Schaufel. Sie verhindert, dass Konglomerate vor der Schaufel hergeschoben werden und nicht in die Wendevorrichtung gelangen. Das Feuchtgut wird beim Wendevorgang vor der Wendevorrichtung aufgenommen und hinter ihr wieder abgelegt, so dass während des Wendens durch das Verfahren der Wendevorrichtung ein Transport des Feuchtguts in Längsrichtung durch die Trocknungsanlage stattfindet. Durch einen Weitertransport des Feuchtguts beim Wenden stellt sich über die Länge des Trocknungsbetts ein Feuchtigkeitsgradient ein. Dadurch kann an einem Ende der Anlage Feuchtgut zugeführt werden, während am anderen Ende ein gleichmäßig durchgetrocknetes Trocknungsgut ausgetragen wird.

Das Feuchtgut kann auch ohne Weitertransport auf der Stelle gewendet werden. Ein Wenden ist bei Vorwärts- und Rückwärtsfahrt der Wendevorrichtung möglich. Ein effektiver Transport in Richtung der Austragungsseite ist jedoch mit der Wendevorrichtung nur bei einer Vorwärtsfahrt der Wendevorrichtung in Transportrichtung des Feuchtguts, nicht aber bei einer Rückfahrt zur Seite der Zuführung des Feuchtguts möglich. Die Wendevorrichtung muss zum weiteren Transport des zu trocknenden Guts zurückfahren, ohne dass dabei das zu trocknende Gut in Austragungsrichtung transportiert werden kann. Das kostet Zeit und Energie.

Durch den verhältnismäßig langsamen Transport kann die Trocknungsleistung bei guter Wärmezufuhr, beispielsweise durch Abwärmenutzung oder solare Einstrahlung im Hochsommer, begrenzt sein, weil bereits getrocknetes Gut nicht schnell genug aus der Trocknungsanlage ausgebracht und zu trocknendes Gut nicht schnell genug auf dem Boden verteilt werden kann. Ist bei einer Trocknungsanlage die den Boden bildende Fläche für eine gegebene Eintragskapazität an feuchtem Schlamm zu lang, so ist der Schlamm bei günstigen Trocknungsbedingungen bereits trocken, lange bevor er die Austragsseite erreicht hat. Die verfügbare Trocknungsfläche kann dann nicht effizient ausgenutzt werden, da sich auf der Fläche bereits getrockneter Schlamm befindet, dem kein Wasser mehr entzogen werden kann. Die maximale Transportleistung der Wendevorrichtung begrenzt daher die maximale Länge der Fläche, die mit der Wendevorrichtung sinnvoll bearbeitet werden kann.

Wird dieses Problem durch mehrere der Trocknungsflächen nebeneinander gelöst, erfordert dies mehrere der Wendevorrichtungen, da deren Breite aus konstruktiven Gründen begrenzt ist. Die durch die Förderleistung der Wendevorrichtung begrenzte Länge hat deshalb einen wesentlichen Einfluss auf die Investitionskosten einer Trocknungsanlage. Darüber hinaus steigen bei einer Trocknungsanlage mit einer von einer gewächshausartigen Gebäudehülle überspannten Trocknungsfläche mit der Breite der Trocknungsfläche wegen des aus statischen Gründen höheren Konstruktionsaufwands für die Gebäudehülle die flächenspezifischen Kosten der Trocknungsanlage.

Aufgabe der vorliegenden Erfindung ist es, eine Wendevorrichtung konstruktiv mit verhältnismäßig geringem Aufwand so weiterzubilden, dass deren Transportleistung erhöht ist. Weiterhin sollen ein Verfahren zum Transportieren von zu trocknendem, teilgetrocknetem oder getrocknetem Gut und eine Verwendung einer Vorrichtung zum Wenden, Mischen und Transportieren von zu trocknendem, teilgetrocknetem oder getrocknetem Gut angegeben werden.

Die Aufgabe wird durch die Merkmale der Ansprüche 1, 11 und 13 gelöst. Zweckmäßige Ausgestaltungen der Erfindung ergeben sich aus den Merkmalen der Ansprüche 2 bis 10 und 12.

Erfindungsgemäß ist eine Vorrichtung zum Wenden, Mischen und Transportieren von zu trocknendem, teilgetrocknetem oder getrocknetem Gut in einer Trocknungsanlage vorgesehen. In der Trocknungsanlage wird das Gut zum Trocknen auf einem Boden ausgebracht und ausgebreitet. Die Vorrichtung weist eine parallel oder im Wesentlichen parallel zum Boden ausgerichtete drehbare Achse auf, um die herum und längs der Achse trogförmige Schaufeln angeordnet sind, so dass die Schaufeln bei einem Drehen der Achse in einem Umkreis um die Achse herum bewegt werden. Die Vorrichtung ist über dem Boden so in entgegengesetzte Bewegungsrichtungen verfahrbar angeordnet, dass die Achse beim Verfahren über dem Boden parallel oder im Wesentlichen parallel zum Boden und in einer der Bewegungsrichtungen senkrecht zur Achse bewegt wird. Weiterhin weist die Vorrichtung eine Antriebsvorrichtung zum Drehen der Achse mit den Schaufeln mit einstellbarer Drehgeschwindigkeit in einer Drehrichtung auf. Die Schaufeln weisen jeweils eine durch gegenüberliegende Kanten begrenzte Öffnung auf. Die beiden Kanten werden dabei von einer sich von einer der Kanten zur anderen der Kanten erstreckenden Wandung oder jeweils von einer mit einem Boden der Schaufel verbundenen Wandung gebildet. Wird die jeweilige Schaufel von der sich von einer der Kanten zur anderen der Kanten erstreckenden Wandung gebildet, kann die Schaufel beispielsweise einen halbrunden Querschnitt aufweisen. In einem senkrecht zur Achse und parallel zu den Bewegungsrichtungen geführten Querschnitt können für jede der Schaufeln zwei sich jeweils radial von der Achse erstreckende und einen Winkel γ von höchstens 72° einschließende Geraden gezogen werden, wobei die Geraden jeweils auf gegenüberliegenden Seiten der Schaufel unabhängig voneinander entweder sich in einem Abschnitt mit der Wandung oder einer der Wandungen decken, die Wandung oder eine der Wandungen an einer Außenseite der Schaufel tangieren, die Wandung oder eine der Wandungen schneiden, wobei ein Winkel β zwischen der jeweiligen Geraden und der Wandung oder der einen der Wandungen weniger als 15°, insbesondere weniger als 12°, insbesondere weniger als 10°, beträgt, oder die Wandung oder eine der Wandungen in einem Wendepunkt einer Krümmung der Wandung oder der einen der Wandungen schneiden. Bei einem in Drehrichtung hinten liegenden Teil der Wandung oder bei der in Drehrichtung hinten liegenden Wandung schließen die jeweilige Gerade und eine weitere Gerade einen Winkel α ein, wobei sich die weitere Gerade von einem Punkt, an dem die Gerade die Wandung tangiert oder schneidet oder an dem der Abschnitt auf einer der Kante näher liegenden Seite des Abschnitts endet, wobei dieser Punkt nicht mit der Kante zusammenfällt, zu der diesem Punkt nächstliegenden Kante erstreckt, wobei 0° < α ≤ 60°.

Da der Winkel ß nur in dem Fall vorkommt, in dem die Geraden die Wandung oder eine der Wandungen jeweils schneiden, ist ß stets größer als 0°. Dadurch, dass der Winkel α zwischen der Geraden und der weiteren Geraden ebenfalls größer als 0° ist, ist bei dem in Drehrichtung hinten liegenden Teil der Wandung oder bei der in Drehrichtung hinten liegenden Wandung ein sich direkt an die Kante anschließender Abschnitt der Wandung stets in Drehrichtung abgekantet oder abgebogen. Durch die Kombination der Merkmale der erfindungsgemäßen Vorrichtung sind die Schaufeln einerseits jeweils so angeordnet, dass sie eine von der Achse abgewandte Öffnung aufweisen und durch ein Drehen der Achse so in das Gut eingreifen können, dass das Gut aufgenommen und in der Schaufel über die sich drehende Achse hinweg transportiert wird und dann beim weiteren Drehen der Achse aus der Schaufel herausfällt. Andererseits erlaubt es die Form der Schaufeln das Gut bei einem schnellen Drehen der Achse unter der Achse hindurch zu schieben, ohne es in die Schaufeln aufzunehmen. Die Achse kann zentral durch eine Welle oder einen Zylinder verlaufen, an der/dem die Schaufeln direkt oder indirekt montiert sind. Bei benachbart angeordneten Schaufeln kann eine Kante und/oder eine Wandung einer Schaufel mit einer Kante und/oder einer Wandung der benachbarten Schaufel zusammenfallen.

Die Vorrichtung hat zum einen den Vorteil, dass durch die trogförmige Ausgestaltung der Schaufeln mit jeweils von der Achse abgewandter Öffnung eine verhältnismäßig große Menge an Gut von jeder der Schaufeln aufgenommen werden kann. Zum anderen ist es mit der Vorrichtung möglich, das Gut sowohl beim Verfahren der Vorrichtung in Transportrichtung des Guts als auch beim Verfahren in entgegengesetzter Richtung zur Austragungsseite der Trocknungsanlage hin zu fördern. Dazu wird die Achse beim Verfahren der Vorrichtung in Transportrichtung stets in einem solchen Abstand über dem Boden positioniert, dass die Schaufeln beim Drehen der Achse in das Gut eingreifen. Die Drehrichtung ist dabei so gewählt, dass mindestens eine bodennahe der Schaufeln sich in der Transportrichtung des Guts und gegen das Gut bewegt. Durch das Drehen greifen die Schaufeln in das Gut ein, nehmen dieses auf, transportieren es in den Schaufeln über die sich drehende Achse hinweg und lassen es dann beim weiteren Drehen in der Drehrichtung aus den Schaufeln herausfallen. Dabei wird die Achse soweit in der Transportrichtung verfahren, dass das Gut dadurch von den Schaufeln näher an der Austragungsseite abgeladen wird als es bei Aufnahme in die jeweilige Schaufel positioniert war. Nach dem Aufnehmen des Guts gegebenenfalls aus den Schaufeln herausfallendes Gut bewirkt ein Aufstauen des Guts vor den sich drehenden und in Transportrichtung bewegenden Schaufeln. Dadurch kann mehr Gut von den einzelnen Schaufeln aufgenommen und das Transportieren dadurch unterstützt werden.

Bei einem Verfahren der Achse entgegen der Transportrichtung kann diese so schnell in der Drehrichtung gedreht werden, dass die in das Gut eingreifenden Schaufeln dieses unter der Achse hindurch in Transportrichtung transportieren und optional in dieser Richtung schleudern, ohne es in die Schaufeln zu laden. Das Gut wird dadurch in Transportrichtung versetzt. Durch ein schnelles Drehen der Achse wird ein Lösen von gegebenenfalls an den Schaufeln anhaftendem Gut von den Schaufeln in Transportrichtung unterstützt.

Es hat sich gezeigt, dass der angegebene Bereich für den Winkel α vorteilhaft ist, um einerseits das Gut bei der beschriebenen langsam ausgeführten Drehbewegung in die Schaufeln aufzunehmen, es aber andererseits bei der beschriebenen schneller ausgeführten Drehbewegung nur unter der Achse hinweg zu transportieren, ohne es in die Schaufeln zu laden.

Weiterhin kann das Gut mit der Vorrichtung gemischt und gewendet werden, indem die Vorrichtung nach einer Aufnahme des Guts in eine der Schaufeln nicht oder nur so weit verfahren wird, dass das Gut beim weiteren Drehen an derselben Position oder im Wesentlichen an derselben Position abgeladen wird, an der es von der jeweiligen Schaufel aufgenommen wurde.

Durch die Möglichkeit, das Gut sowohl bei der Vorwärtsfahrt als auch bei der Rückwärtsfahrt der Achse jeweils sehr effektiv zur Austragungsseite hin zu transportieren, ist die Transportleistung der Vorrichtung gegenüber der aus der DE 10 2004 037 209 A1 bekannten Vorrichtung deutlich erhöht. Dadurch kann die maximale Länge des der Trocknung dienenden Bodens vergrößert werden, so dass die Investitionskosten pro Flächeneinheit bzw. pro Gewichtseinheit des zu trocknenden Guts sinken. Auch bei einer Trocknung unter günstigen Bedingungen, wie im Hochsommer oder bei Nutzung von Abwärme, kann die Trocknungsanlage mit der erfindungsgemäßen Vorrichtung effizient betrieben werden, ohne dass bereits getrocknetes Gut nicht rechtzeitig ausgetragen werden kann und dadurch den Boden für weiter aufzubringendes zu trocknendes Gut blockiert.

Ein weiterer Vorteil der erfindungsgemäßen Vorrichtung besteht darin, dass diese verwendet werden kann, um zu trocknendes, teilgetrocknetes oder getrocknetes Gut in einer Trocknungsanlage, in welcher das Gut zum Trocknen auf einem Boden ausgebracht und ausgebreitet wird, gezielt an einen beliebigen Bereich des Bodens zu transportieren. Dazu wird die Achse in einem solchen Abstand über dem Boden positioniert, dass die Schaufeln beim Drehen der Achse in das Gut eingreifen. Die Achse wird in einer Bewegungsrichtung auf das zu transportierende Gut hin verfahren und dabei in einer solchen Drehrichtung gedreht, dass mindestens eine bodennahe der Schaufeln sich in der Bewegungsrichtung und gegen das Gut bewegt, wobei die Schaufel durch das Drehen in das Gut eingreift und dieses aufnimmt. Das Gut wird dann durch das Drehen in der Schaufel angehoben, wobei die Achse und damit die Schaufel dann in einer solchen Position gehalten werden, dass das Gut in der Schaufel verbleibt, wobei die Vorrichtung dann an eine Position über dem Bereich des Bodens verfahren wird, an der die Achse dann so gedreht wird, dass das in der Schaufel enthaltene Gut aus der Schaufel herausfällt.

Alternativ kann das Gut, beispielsweise mittels eines Radladers, einer Förderschnecke, eines Trogkettenförderers, eines Spiralförderers, eines Förderbands oder einer sonstigen Fördervorrichtung, von oben in eine der Schaufeln eingebracht und dort gehalten werden, wobei die Vorrichtung dann an eine Position über dem Bereich des Bodens verfahren wird, an der die Achse dann so gedreht wird, dass das in der Schaufel enthaltene Gut aus der Schaufel herausfällt. Je nach Erfordernis kann die Achse vor dem Verfahren angehoben werden, um nicht durch auf dem Boden vorhandenes Gut beim Verfahren behindert zu werden.

Bei einem 72° übersteigenden Wert für γ wird ein Aufnehmen des Guts in die Schaufeln durch bloßes Drehen der Achse zunehmend ineffektiv, weil dann zu viel Gut wieder aus der Schaufel herausfällt, bevor es in den Schaufeln über die sich drehende Achse hinweg transportiert wird. Um dieses Herausfallen zu verringern beträgt bei einer Ausgestaltung der Erfindung γ höchstens 60°.

Es ist möglich, dass 0° < α ≤ 50°, insbesondere 0° < α ≤ 45° ist. Diese Bereiche von α können, je nach Konsistenz des Trockenguts, einen effektiveren Transport des Guts in Transportrichtung ermöglichen.

Die Kante des in Drehrichtung hinten liegenden Teils der Wandung oder der in Drehrichtung hinten liegenden Wandung kann in dem Querschnitt das am weitesten von der Achse beabstandete Element der Schaufel bilden. Sofern nicht beide Kanten gleichweit von der Achse beabstandet sind, bedeutet dies, dass die in Drehrichtung hinten liegende Kante weiter hervorsteht als die andere Kante. Dadurch wird das Aufnehmen des Guts in die Schaufel erleichtert.

Die Antriebsvorrichtung kann so ausgebildet sein, dass sie ein wahlweises Drehen der Achse in die Drehrichtung und eine entgegengesetzte weitere Drehrichtung erlaubt.

Bei einer Ausgestaltung der erfindungsgemäßen Vorrichtung ist die Vorrichtung an beiden Seiten der Achse bzw. einer die Achse bildenden Welle in jeweils einem, insbesondere eine zusätzliche Antriebsvorrichtung aufweisenden, Fahrwerk geführt. Beispielsweise kann der Boden von einer rechteckigen oder im Wesentlichen rechteckigen Fläche gebildet sein und die Fahrwerke können an Schienen oder Spuren beidseits der oder an den Längsseiten der Fläche oder an/auf einer längsseits der Fläche angeordneten Begrenzungsmauer geführt sein. Die Begrenzungsmauer hat dabei gleichzeitig die Funktion, zu verhindern, dass das zu trocknende Gut beim Wenden, Mischen oder Transportieren nach außen geschleudert wird und dabei, beispielsweise eine gewächshausartige Gebäudehülle der Trocknungsanlage verschmutzt. Um ein solches Verschmutzen zu verhindern, kann auch beidseits der Achse und der Schaufeln seitlich an der Vorrichtung jeweils ein Schild zur Verhinderung einer seitlichen Verteilung des Guts angeordnet sein. Bei Vorsehen solcher Schilder kann die Begrenzungsmauer entfallen. Dadurch können Investitionskosten eingespart werden. Bei den Schildern kann es sich beispielsweise um Blechtafeln handeln.

Bei einer Ausgestaltung der Erfindung weist die Vorrichtung ein, insbesondere um eine weitere Achse rotierendes, insbesondere austauschbares, Mittel zum Auskratzen oder Ausschaben der Schaufeln auf, um diese von darin anhaftendem Gut zu befreien. Dadurch kann die Vorrichtung auch zum Transportieren von relativ feuchtem und damit klebrigem Schlamm und sonstigem Gut eingesetzt werden, ohne dass es zu einem Verbleiben des Schlamms oder sonstigen Guts durch Festkleben in den Schaufeln kommt. Dadurch kann auch relativ feuchter Schlamm oder sonstiges Gut durch die Vorrichtung vom Eintragungsbereich in Bereiche transportiert werden, in denen der Schlamm bzw. das Gut bereits trocken oder teilgetrocknet ist und mit diesem Schlamm bzw. Gut vermischt werden. Durch das Mittel zum Auskratzen oder Ausschaben kann mittels der Vorrichtung auch sehr klebriger und damit schwerer Schlamm verarbeitet werden, ohne eine gewichtsbedingte Verformung oder Beschädigung der Vorrichtung zu bewirken. Dadurch ist das im Stand der Technik häufig eingesetzte Rückmischen von teilgetrocknetem Schlamm mit klebrigem, relativ feuchtem Schlamm zur Verminderung von dessen Klebrigkeit nicht mehr erforderlich. Auch dadurch wird die Effizienz der Trocknungsanlage gesteigert.

Bei einer Ausgestaltung der erfindungsgemäßen Vorrichtung ist der Abstand zwischen dem Boden und der Achse, insbesondere mittels einer weiteren Antriebsvorrichtung, veränderbar. Dabei oder alternativ kann die Vorrichtung mittels eines einen Mindestabstand zwischen Boden und Schaufeln gewährleistenden, insbesondere mindestens eine Rolle aufweisenden, Abstandshalters auf dem Boden lasten. Wenn die Vorrichtung über den Boden geführt wird, werden Bodenunebenheiten durch den Abstandshalter automatisch ausgeglichen, so dass der Abstand zwischen Achse und Boden stets nahezu gleich bleibt.

Bei einer Ausgestaltung der erfindungsgemäßen Vorrichtung ist diese so aufgebaut, dass zumindest eine jeweils oberste Schaufel von oben her zugänglich ist, so dass sie mit Gut gefüllt werden kann. Das Füllen kann beispielsweise mittels eines Radladers oder eines Förderaggregats erfolgen. Das in die Schaufel gefüllt Gut kann dann an einer beliebigen Stelle auf der Fläche abgeladen werden.

Die Erfindung betrifft weiterhin ein Verfahren zum Transportieren von zu trocknendem, teilgetrocknetem oder getrocknetem Gut mit einer Transportvorrichtung in einer Trocknungsanlage, in welcher das Gut zum Trocknen auf einem Boden ausgebracht und ausgebreitet ist/wird, wobei die Transportvorrichtung eine parallel oder im Wesentlichen parallel zum Boden ausgerichtete drehbare Achse aufweist, um die herum und längs der Achse trogförmige Schaufeln angeordnet sind, so dass die Schaufeln bei einem Drehen der Achse in einem Umkreis um die Achse herum bewegt werden, wobei die Transportvorrichtung über dem Boden so in entgegengesetzte Bewegungsrichtungen verfahrbar angeordnet ist, dass die Achse beim Verfahren über dem Boden parallel oder im Wesentlichen parallel zum Boden und in einer der Bewegungsrichtungen senkrecht zur Achse bewegt wird, wobei die Transportvorrichtung eine Antriebsvorrichtung zum Drehen der Achse mit den Schaufeln mit einstellbarer Drehgeschwindigkeit in einer Drehrichtung aufweist. Der Boden wird dabei von einer länglichen Fläche gebildet, wobei das Gut auf einer ersten der kürzeren Seiten der Fläche aufgetragen wird, dann längs der Fläche mittels der Transportvorrichtung transportiert und auf einer zweiten der kürzeren Seiten der Fläche ausgetragen wird. Dabei wird die Achse stets in einem solchen Abstand über dem Boden positioniert, dass die Schaufeln beim Drehen der Achse in das Gut eingreifen.

Die Achse wird in einer ersten Bewegungsrichtung in Richtung der zweiten der kürzeren Seiten verfahren und dabei in einer solchen Drehrichtung gedreht, dass mindestens eine bodennahe der Schaufeln sich in der ersten Bewegungsrichtung und gegen das Gut bewegt, wobei die Schaufeln durch das Drehen in das Gut eingreifen, dieses aufnehmen, in den Schaufeln über die sich drehende Achse hinweg transportieren und dann beim weiteren Drehen in der Drehrichtung aus den Schaufeln herausfallen lassen. Dabei wird die Achse soweit in die erste Bewegungsrichtung verfahren, dass das Gut dadurch von den Schaufeln näher an der zweiten Seite abgeladen wird als es bei Aufnahme in die jeweilige Schaufel positioniert war. Zusätzlich kann die Achse in einer der ersten Bewegungsrichtung entgegengesetzten zweiten Bewegungsrichtung verfahren und dabei so schnell in der Drehrichtung gedreht werden, dass die in das Gut eingreifenden Schaufeln dieses unter der Achse hindurch in Richtung der zweiten der kürzeren Seiten transportieren und optional in diese Richtung schleudern, ohne es in die Schaufeln zu laden. Bei der Transportvorrichtung kann es sich um die erfindungsgemäße Vorrichtung handeln.

Nachfolgend wird die Erfindung anhand von Ausführungsbeispielen und der Figuren näher erläutert. Es zeigen:
- Fig. 1: eine schematische Darstellung einer ersten Ausgestaltung der erfindungsgemäßen Vorrichtung im Querschnitt,
- Fig. 2: eine schematische Darstellung einer zweiten Ausgestaltung der erfindungsgemäßen Vorrichtung im Querschnitt,
- Fig. 3 a, b: eine schematische Darstellung des erfindungsgemäßen Verfahrens,
- Fig. 4 a - d: eine weitere schematische Darstellung des erfindungsgemäßen Verfahrens,
- Fig. 5: eine schematische Darstellung des Bewegungsablaufs bei einer dritten Ausgestaltung der erfindungsgemäßen Vorrichtung im Querschnitt und

- Fig. 6: eine schematische Darstellung einer Trocknungsanlage mit der erfindungsgemäßen Vorrichtung in Aufsicht.

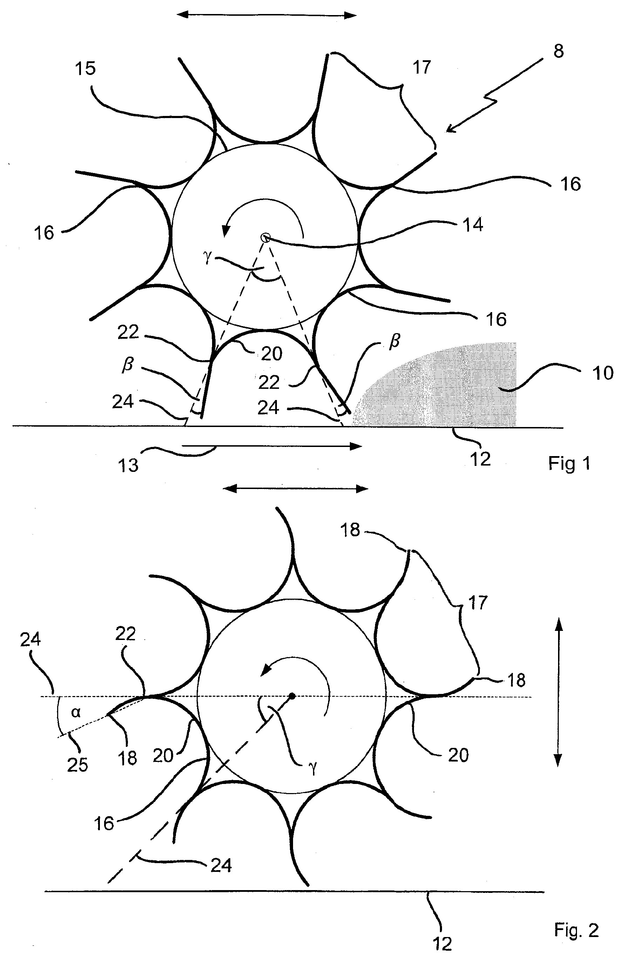

Fig. 1 zeigt das auf dem Boden 12 ausgebrachte und darauf ausgebreitete zu trocknende Gut 10 und die erfindungsgemäße Vorrichtung 8 mit einer drehbar gelagerten Achse 14 und insgesamt acht sich längs der Achse 14 erstreckenden auf einer Walze 15 montierten Schaufeln 16 in einem senkrecht zur Achse 14 und parallel zur ersten Bewegungsrichtung 13 geführten Querschnitt. Die Schaufeln 16 weisen jeweils eine von der Achse 14 abgewandte Öffnung 17 auf. Im hier dargestellten Betrieb dreht sich die Vorrichtung 8 im Gegenuhrzeigersinn und wird in der ersten Bewegungsrichtung 13 verfahren. Die Wandung 20 wird hier von zwei sich jeweils radial von der Achse erstreckenden Geraden 24 jeweils auf gegenüberliegenden Seiten der Schaufel 16 in einem Punkt 22 geschnitten, wobei ein Winkel β zwischen der Geraden 24 und der Wandung 20 weniger als 15° beträgt. Der von den Geraden 24 eingeschlossene Winkel γ beträgt etwa 45°.

Fig. 2 zeigt eine weitere Ausgestaltung der erfindungsgemäßen Vorrichtung 8, bei der jeweils die Wandung 20 der Schaufeln 16 im senkrecht zur Achse 14 und parallel zur Bewegungsrichtung 13 geführten Querschnitt zwei Kanten 18 aufweist, die die Öffnung 17 der Schaufel 16 auf gegenüberliegenden Seiten der Öffnung 17 begrenzen. Die Wandung 20 wird an einer Außenseite der Schaufel 16 im Punkt 22 tangiert. Dabei schließt der in Drehrichtung hinten liegender Teil der Wandung 20 zwischen dem Punkt 22 und der diesem Punkt 22 nächstliegenden Kante 18 mit der Geraden 24 einen Winkel α ein, der hier etwa 40° beträgt. Durch das Vorsehen einer um den Winkel gebogenen Wandung wird ein besseres Eingreifen der Schaufel 16 in das Gut 10 und eine bessere Aufnahme des Guts 10 in die Schaufel 16 ermöglicht. Auf der gegenüberliegenden Seite der Schaufel 16 schneidet eine weitere Gerade 24 die Wandung 20 in einem Wendepunkt einer von der Wandung 20 gebildeten Krümmung. Der von den Geraden 24 eingeschlossene Winkel γ beträgt etwa 45°.

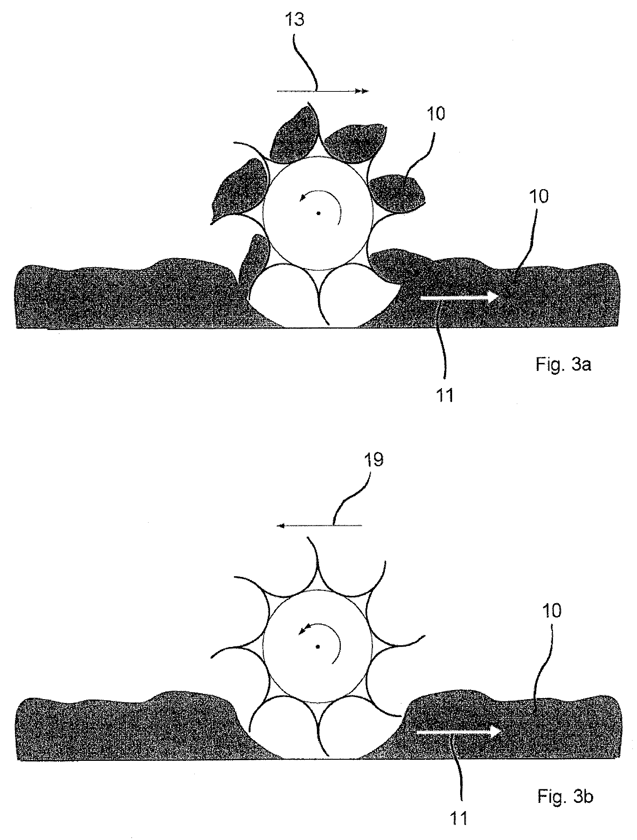

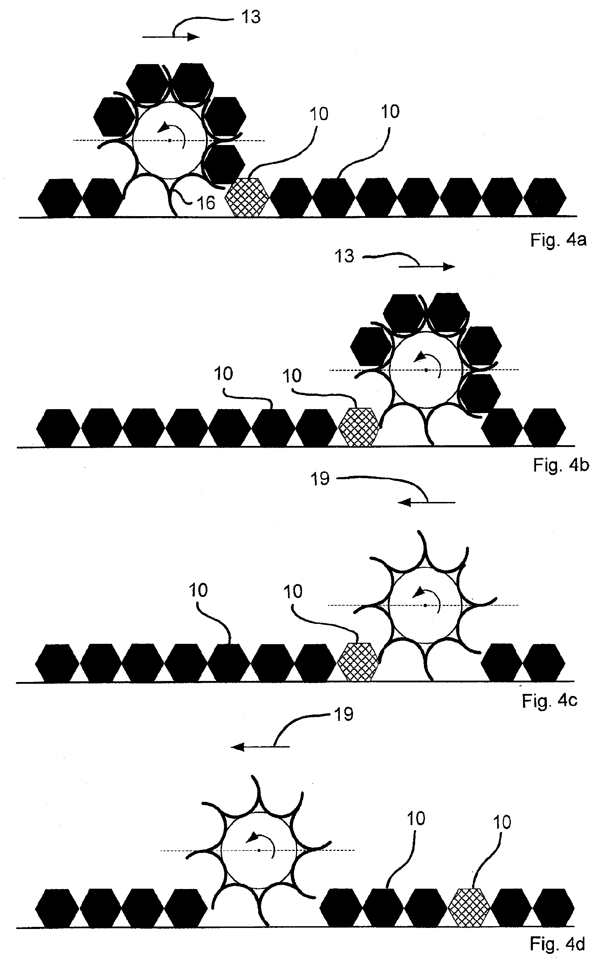

Fig. 3a und 3b und Fig. 4a-d zeigen schematisch die Durchführung des erfindungsgemäßen Verfahrens zum Transportieren des Guts 10 in Transportrichtung 11. In den Figuren 3a, 4a und 4b ist gezeigt, wie die Achse 14 mit den Schaufeln 16 in Bewegungsrichtung 13 verfahren wird. Dabei werden die Schaufeln 16 gegen das Gut 10 bewegt, wobei die Schaufeln 16 durch das Drehen in das Gut 10 eingreifen, dieses aufnehmen, in den Schaufeln 16 über die sich drehende Achse 14 hinweg transportieren und dann beim weiteren Drehen in der Drehrichtung aus den Schaufeln 16 herausfallen lassen. Dabei wird die Achse 14 soweit in die erste Bewegungsrichtung 13 verfahren wird, dass das Gut 10 dadurch von den Schaufeln 16 weiter in Bewegungsrichtung abgeladen wird als es bei Aufnahme in die jeweilige Schaufel 16 positioniert war.

In den Figuren 3b, 4c und 4d ist gezeigt, wie die Achse 14 mit den Schaufeln 16 in einer der ersten Bewegungsrichtung 13 entgegengesetzten zweiten Bewegungsrichtung 19 verfahren und dabei so schnell in der Drehrichtung gedreht wird, dass die in das Gut 10 eingreifenden Schaufeln 16 dieses unter der Achse 14 hindurch in Transportrichtung 11 transportieren ohne es in die Schaufeln 16 zu laden.

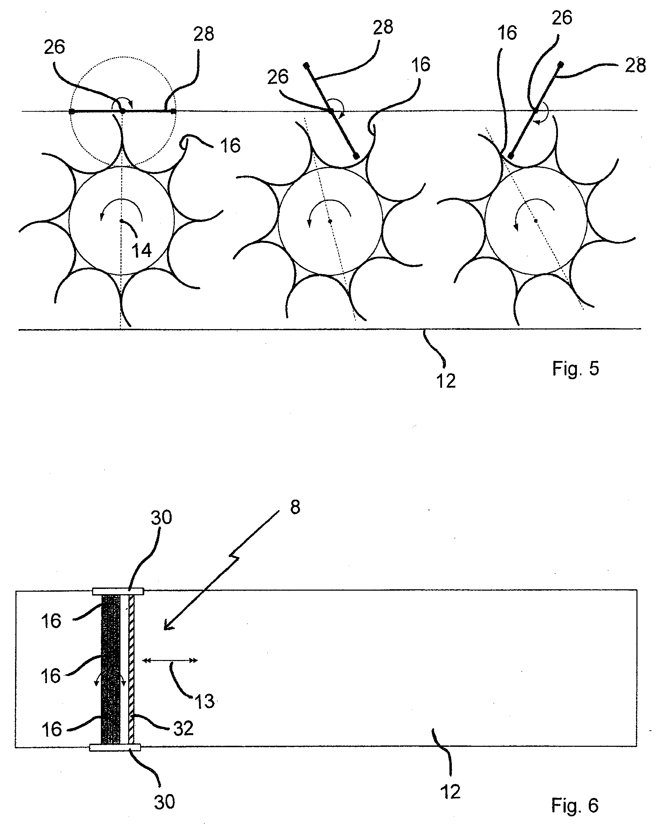

Fig. 5 zeigt schematisch in drei Stufen von links nach rechts einen Bewegungsablauf der bereits in Fig. 2 dargestellten Vorrichtung 8 mit einem um die weitere Achse 26 rotierbaren Mittel 28 zum Auskratzen der Schaufeln 16. Dabei wird deutlich, wie das Mittel 28 zum Auskratzen in die Schaufel eingreift und die Rotation dieses Mittels 28 mit der Rotation der Achse 14 synchronisiert ist.

Fig. 6 zeigt schematisch in Aufsicht einen als rechteckige Trocknungsfläche ausgebildeten Boden 12, der sich beispielsweise in einer gewächshausartigen Trocknungshalle befinden kann. Längsseits der Trocknungsfläche befindet sich jeweils eine hier nicht dargestellte Schiene, in der die Fahrwerke 30 der erfindungsgemäßen Vorrichtung 8 geführt sind. Die Vorrichtung 8 weist weiterhin einen die beiden Fahrwerke 30 verbindenden und die ganze Vorrichtung 8 stabilisierenden Rahmen 32 auf. Weiterhin sind in die Aufsicht drei Schaufeln 16 zu erkennen.

Bei der hier dargestellten Fläche kann links das zu trocknende Gut 10 auf einer Eintragsseite aufgetragen und rechts das getrocknete Gut 10 auf einer Austragungsseite ausgetragen werden. Die erfindungsgemäße Vorrichtung 8 kann dabei auf den Schienen von links nach rechts und rechts nach links verfahren werden, jedoch unabhängig von der Bewegungsrichtung das Gut 10 nach rechts transportieren. Bei der Fahrt von der Eintrags- zur Austragungsseite hin dreht sich die Achse 14 der erfindungsgemäßen Vorrichtung 8 aus Sicht der dabei bodennah über den Boden 12 geführten Schaufeln 16 in Bewegungsrichtung. Das Gut 10 wird dabei in die Schaufeln 16 geschoben, aufgenommen, über die Achse 14 hinweg angehoben und schließlich dahinter wieder abgelegt. Wegen des Verfahrens der Vorrichtung 8 in Richtung der Austragungsseite wird das Gut 10 dabei in diese Richtung versetzt. Fährt die Vorrichtung 8 nach Erreichen der Austragungsseite in umgekehrter Bewegungsrichtung zur Auftragungsseite zurück, wird die Drehrichtung der Achse 14 beibehalten, die Rotationsgeschwindigkeit aber soweit erhöht, dass dadurch das Gut 10 entgegen der Bewegungsrichtung zur Austragungsseite hin geschleudert wird. Die erfindungsgemäße Vorrichtung 8 muss somit keine "Leerfahrten" vollführen, bei denen kein Trocknungsgut in Richtung der Austragungsseite transportiert wird.

Um feuchtes Gut 10 zu einem beliebigen Bereich der Trocknungsfläche hin zu transportieren, um dieses mit bereits teilgetrocknetem Gut 10 zu mischen, kann das feuchte Gut 10 von oben in eine der Schaufeln 16 der Vorrichtung 8 eingebracht, in schneller Vorfahrt zu dem Bereich verfahren und dort abgekippt werden. Es kann auch getrocknetes oder teilgetrocknetes Gut 10 zu einem beliebigen Bereich der Trocknungsfläche hin transportiert werden, um dieses mit feuchtem Gut 10 zu mischen. Dazu kann das getrocknete oder teilgetrocknete Gut 10 durch Drehen der Achse 14 von einer der Schaufeln 16 aufgenommen werden, in schneller Vorfahrt zu dem Bereich verfahren und dort abgekippt werden.

Um getrocknetes oder teilgetrocknetes Gut 10 auf derselben Seite der Trocknungsfläche austragen zu können, auf der das feuchte Gut 10 auch eingetragen wurde, kann das getrocknete oder teilgetrocknete Gut 10 durch Drehen der Achse 14 von einer der Schaufeln 16 aufgenommen werden, in schneller Vorfahrt zu dieser Seite der Trocknungsfläche verfahren und dort in einem separaten Bereich getrennt von dem feuchten Gut 10 abgekippt werden.

Auf Grund der trogförmigen Form der Schaufeln 16 weisen diese eine hohe Beladekapazität auf, so dass pro Fahrt relativ viel Gut 10 transportiert werden kann. Die Befüllung der Schaufeln 16 kann entweder automatisch, z. B. mittels eines Abwurfs mit einer Förderschnecke oder einem Förderband von oben oder durch einen Radlader, erfolgen.

Die erfindungsgemäße Vorrichtung 8 erlaubt es in verhältnismäßig kurzer Zeit, relativ viel zu trocknendes Gut 10 zu transportieren und auf der Trocknungsfläche in Richtung der Austragungsstelle zu transportieren. Dadurch können Trocknungsflächen mit einer Länge von mehr als 200 m realisiert werden ohne dafür wesentlich höhere Investitionen für eine Transport-, Misch- und Wendevorrichtung tätigen zu müssen als im Stand der Technik für eine solche Vorrichtung für eine wesentlich kürzere Trocknungsfläche.

### Bezugszeichenliste

- 8: Vorrichtung
- 10: Gut
- 11: Transportrichtung
- 12: Boden
- 13: erste Bewegungsrichtung
- 14: Achse
- 15: Walze
- 16: Schaufel
- 17: Öffnung
- 18: Kante
- 19: zweite Bewegungsrichtung
- 20: Wandung
- 22: Punkt
- 24: Gerade
- 26: weitere Achse
- 28: Mittel zum Auskratzen
- 30: Fahrwerk
- 32: Rahmen

## Patentansprüche

1. Vorrichtung (8) zum Wenden, Mischen und Transportieren von zu trocknendem, teilgetrocknetem oder getrocknetem Gut (10) in einer Trocknungsanlage, in welcher das Gut (10) zum Trocknen auf einem Boden (12) ausgebracht und ausgebreitet wird, wobei die Vorrichtung (8) eine im Wesentlichen parallel zum Boden (12) ausgerichtete drehbare Achse (14) aufweist, um die herum und längs der Achse (14) trogförmige Schaufeln (16) angeordnet sind, so dass die Schaufeln (16) bei einem Drehen der Achse (14) in einem Umkreis um die Achse (14) herum bewegt werden, wobei die Vorrichtung (8) über dem Boden (12) so in entgegengesetzte Bewegungsrichtungen (13, 19) verfahrbar angeordnet ist, dass die Achse (14) beim Verfahren über dem Boden (12) im Wesentlichen parallel zum Boden (12) und in einer der Bewegungsrichtungen (13, 19) senkrecht zur Achse (14) bewegt wird, wobei die Vorrichtung (8) eine Antriebsvorrichtung zum Drehen der Achse (14) mit den Schaufeln (16) mit einstellbarer Drehgeschwindigkeit in einer Drehrichtung aufweist, wobei die Schaufeln (16) jeweils eine durch gegenüberliegende Kanten (18) begrenzte Öffnung (17) aufweisen, wobei die beiden Kanten (18) von einer sich von einer der Kanten (18) zur anderen der Kanten (18) erstreckenden Wandung (20) oder jeweils von einer mit einem Boden der Schaufel verbundenen Wandung (20) gebildet werden, wobei in einem senkrecht zur Achse (14) und parallel zu den Bewegungsrichtungen (13, 19) geführten Querschnitt für jede der Schaufeln zwei sich jeweils radial von der Achse erstreckende und einen Winkel γ von höchstens 72° einschließende Geraden (24) gezogen werden können, wobei die Geraden (24) jeweils auf gegenüberliegenden Seiten der Schaufel (16) unabhängig voneinander entweder sich in einem Abschnitt mit der Wandung (20) oder einer der Wandungen (20) decken, die Wandung (20) oder eine der Wandungen (20) an einer Außenseite der Schaufel (16) tangieren, die Wandung (20) oder eine der Wandungen (20) schneiden, wobei ein Winkel β zwischen der Geraden (24) und der Wandung (20) oder der einen der Wandungen (20) weniger als 15° beträgt, oder die Wandung (20) oder eine der Wandungen (20) in einem Wendepunkt einer Krümmung der Wandung (20) oder der einen der Wandungen (20) schneiden, wobei bei einem in Drehrichtung hinten liegenden Teil (22) der Wandung (20) oder bei der in Drehrichtung hinten liegenden Wandung (20) die Gerade (24) und eine weitere Gerade (25) einen Winkel α einschließen, wobei sich die weitere Gerade (25) von einem Punkt (22), an dem die Gerade (24) die Wandung (20) tangiert oder schneidet oder an dem der Abschnitt auf einer der Kante (18) näher liegenden Seite des Abschnitts endet, wobei dieser Punkt (22) nicht mit der Kante (18) zusammenfällt, zu der diesem Punkt (22) nächstliegenden Kante (18) erstreckt, wobei 0° < α ≤ 60°.

2. Vorrichtung (8) nach Anspruch 1, wobei γ höchstens 60° beträgt und/oder 0° < α ≤ 50° oder 0° < α ≤ 45° ist.

3. Vorrichtung (8) nach einem der vorhergehenden Ansprüche, wobei die Kante (18) des in Drehrichtung hinten liegenden Teils (22) der Wandung (20) oder der in Drehrichtung hinten liegenden Wandung (20) in dem Querschnitt ein am weitesten von der Achse (14) beabstandetes Element der Schaufel (16) bildet.

4. Vorrichtung (8) nach einem der vorhergehenden Ansprüche, wobei die Antriebsvorrichtung so ausgebildet ist, dass sie ein wahlweises Drehen der Achse (14) in die Drehrichtung und eine entgegengesetzte weitere Drehrichtungen erlaubt.

5. Vorrichtung (8) nach einem der vorhergehenden Ansprüche, wobei die Vorrichtung (8) an beiden Seiten der Achse (14) in jeweils einem Fahrwerk (30) geführt ist.

6. Vorrichtung (8) nach Anspruch 5, wobei der Boden (12) von einer im Wesentlichen rechteckigen Fläche gebildet ist und die Fahrwerke (30) an Schienen oder Spuren beidseits der oder an den Längsseiten der Fläche oder an/auf einer längsseits der Fläche angeordneten Begrenzungsmauer geführt sind.

7. Vorrichtung (8) nach einem der vorhergehenden Ansprüche, wobei beidseits der Achse (14) und der Schaufeln (16) seitlich an der Vorrichtung (8) jeweils ein Schild zur Verhinderung einer seitlichen Verteilung des Guts (10) angeordnet ist.

8. Vorrichtung (8) nach einem der vorhergehenden Ansprüche, wobei die Vorrichtung (8) ein, insbesondere um eine weitere Achse (26) rotierendes, Mittel (28) zum Auskratzen oder Ausschaben der Schaufeln (16) aufweist, um diese von darin anhaftendem Gut (10) zu befreien.

9. Vorrichtung (8) nach einem der vorhergehenden Ansprüche, wobei der Abstand zwischen dem Boden (12) und der Achse (14) veränderbar ist und/oder wobei die Vorrichtung (8) mittels eines einen Mindestabstand zwischen Boden (12) und Schaufeln (16) gewährenden Abstandshalters auf dem Boden (12) lastet.

10. Vorrichtung (8) nach einem der vorhergehenden Ansprüche, wobei die Vorrichtung (8) so aufgebaut ist, dass zumindest eine jeweils oberste Schaufel (16) von oben her zugänglich ist, so dass sie mit Gut (10) gefüllt werden kann.

11. Verfahren zum Transportieren von zu trocknendem, teilgetrocknetem oder getrocknetem Gut (10) mit einer Transportvorrichtung in einer Trocknungsanlage, in welcher das Gut (10) zum Trocknen auf einem Boden (12) ausgebracht und ausgebreitet ist/wird, wobei die Transportvorrichtung eine im Wesentlichen parallel zum Boden (12) ausgerichtete drehbare Achse (14) aufweist, um die herum und längs der Achse (14) trogförmige Schaufeln (16) angeordnet sind, so dass die Schaufeln (16) bei einem Drehen der Achse (14) in einem Umkreis um die Achse (14) herum bewegt werden, wobei die Transportvorrichtung über dem Boden (12) so in entgegengesetzte Bewegungsrichtungen (13, 19) verfahrbar angeordnet ist, dass die Achse (14) beim Verfahren über dem Boden (12) im Wesentlichen parallel zum Boden (12) und in einer der Bewegungsrichtungen (13, 19) senkrecht zur Achse (14) bewegt wird, wobei die Transportvorrichtung eine Antriebsvorrichtung zum Drehen der Achse (14) mit den Schaufeln (16) mit einstellbarer Drehgeschwindigkeit in einer Drehrichtung aufweist, wobei der Boden (12) von einer länglichen Fläche gebildet wird, wobei das Gut (10) auf einer ersten der kürzeren Seiten der Fläche aufgetragen, dann längs der Fläche mittels der Transportvorrichtung transportiert und auf einer zweiten der kürzeren Seiten der Fläche ausgetragen wird, wobei die Achse (14) stets in einem solchen Abstand über dem Boden (12) positioniert wird, dass die Schaufeln (16) beim Drehen der Achse (14) in das Gut (10) eingreifen,
- wobei die Achse (14) in einer ersten Bewegungsrichtung (13) in Richtung der zweiten der kürzeren Seiten verfahren und dabei in einer solchen Drehrichtung gedreht wird, dass mindestens eine bodennahe der Schaufeln (16) sich in der ersten Bewegungsrichtung (13) und gegen das Gut (10) bewegt, wobei die Schaufeln (16) durch das Drehen in das Gut (10) eingreifen, dieses aufnehmen, in den Schaufeln (16) über die sich drehende Achse (14) hinweg transportieren und dann beim weiteren Drehen in der Drehrichtung aus den Schaufeln (16) herausfallen lassen, wobei die Achse (14) dabei soweit in die erste Bewegungsrichtung (13) verfahren wird, dass das Gut (10) dadurch von den Schaufeln (16) näher an der zweiten Seite abgeladen wird als es bei Aufnahme in die jeweilige Schaufel (16) positioniert war,
und
- wobei die Achse (14) alternativ in einer der ersten Bewegungsrichtung (13) entgegengesetzten zweiten Bewegungsrichtung (19) verfahren und dabei so schnell in der Drehrichtung gedreht wird, dass die in das Gut (10) eingreifenden Schaufeln (16) dieses unter der Achse (14) hindurch in Richtung der zweiten der kürzeren Seiten transportieren und optional in diese Richtung schleudern, ohne es in die Schaufeln (16) zu laden,
wobei die Transportvorrichtung eine Vorrichtung (8) nach einem der Ansprüche 1 bis 10 ist.

12. Verwendung einer Vorrichtung nach einem der Ansprüche 1 bis 10, um zu trocknendes, teilgetrocknetes oder getrocknetes Gut (10) in einer Trocknungsanlage, in welcher das Gut (10) zum Trocknen auf einem Boden (12) ausgebracht und ausgebreitet wird, gezielt an einen beliebigen Bereich des Bodens (12) zu transportieren,
- wobei die Achse (14) in einem solchen Abstand über dem Boden (12) positioniert wird, dass die Schaufeln (16) beim Drehen der Achse (14) in das Gut (10) eingreifen, wobei die Achse (14) in einer Bewegungsrichtung (13) auf das zu transportierende Gut (10) hin verfahren und dabei in einer solchen Drehrichtung gedreht wird, dass mindestens eine bodennahe der Schaufeln (16) sich in der Bewegungsrichtung (13) und gegen das Gut (10) bewegt, wobei die Schaufel (16) durch das Drehen in das Gut (10) eingreift und dieses aufnimmt, wobei das Gut (10) durch das Drehen in der Schaufel (16) angehoben wird, wobei die Achse (14) und damit die Schaufel (16) dann in einer solchen Position gehalten werden, dass das Gut (10) in der Schaufel (16) verbleibt, wobei die Vorrichtung (8) dann an eine Position über dem Bereich des Bodens (12) verfahren wird, an der die Achse (14), dann so gedreht wird, dass das in der Schaufel (16) enthaltene Gut (10) aus der Schaufel (16) herausfällt,
oder
- wobei das Gut (10) von oben in eine der Schaufeln (16) eingebracht und dort gehalten wird, wobei die Vorrichtung (8) dann an eine Position über dem Bereich des Bodens (12) verfahren wird, an der die Achse (14) dann so gedreht wird, dass das in der Schaufel (16) enthaltene Gut (10) aus der Schaufel (16) herausfällt.

## Claims

1. A device (8) for turning, mixing, and transporting material to be dried, partially dried material or dried material (10) in a drying facility, in which the material (10) is placed on a floor (12) and spread out for drying, wherein the device (8) has a rotatable axis (14) oriented substantially parallel to the floor (12), trough-like scoops (16) being arranged around and along the axis (14) such that the scoops (16) are moved around the axis (14) in a circle during rotation of the axis (14), wherein the device (8) is arranged above the floor (12) so as to be displaceable in opposite movement directions (13, 19) such that, during displacement above the floor (12), the axis (14) is moved substantially parallel to the floor (12) and in one of the movement directions (13, 19) perpendicular to the axis (14), wherein the device (8) comprises a drive device for rotating the axis (14) having the scoops (16) at an adjustable speed of rotation in one direction of rotation, wherein the scoops (16) each have an opening (17) bordered by opposing edges, wherein the two edges (18) are formed by a wall (20), which extends from one of the edges (18) to the other of the edges (18), or are each formed by a wall (20) connected to a base of the scoop, wherein, for each of the scoops, in a cross section extending perpendicular to the axis (14) and parallel to the movement directions (13, 19), it is possible to draw two straight lines (24), each of which extends radially from the axis, and which enclose an angle γ of 72° at the most, wherein, on opposite sides of the scoop (16) and independently of one another, each of the straight lines (24) either overlaps, in one section, with the wall (20) or one of the walls (20), is tangent to the wall (20) or one of the walls (20) on an outer side of the scoop (16), intersects the wall (20) or one of the walls (20), wherein an angle β between the straight line (24) and the wall (20) or one of the walls (20) is less than 15°, or intersects the wall (20) or one of the walls (20) at an inflection point of a curvature of the wall (20) or one of the walls (20), wherein the straight line (24) and another straight line (25) enclose an angle α at a part (22) of the wall (20) located at the rear in the direction of rotation or at the wall (20) located at the rear in the direction of rotation, wherein the other straight line (25) extends from one point (22), at which the straight line (24) is tangent to or intersects the wall (20) or at which the section ends at a side of the section located closer to the edge (18), wherein this point (22) does not coincide with the edge (18), to the edge (18) located closest to this point (22), wherein 0° < α ≤ 60°.

2. The device (8) according to claim 1, wherein γ is 60° at most, and/or is 0° < α ≤ 50° or 0° < α ≤ 45°.

3. The device (8) according to any one of the preceding claims, wherein the edge (18) of the part (22) of the wall (20) located at the rear in the direction of rotation or of the wall (20) located at the rear in the direction of rotation forms, in the cross section, an element of the scoop (16) that is spaced furthest from the axis (14).

4. The device (8) according to any one of the preceding claims, wherein the drive device is designed such that this enables the axis (14) to selectively rotate in the direction of rotation and in another, opposite, direction of rotation.

5. The device (8) according to any one of the preceding claims, wherein the device (8) is guided in an undercarriage (30) on each of the two sides of the axis (14).

6. The device (8) according to claim 5, wherein the floor (12) is formed by a substantially rectangular surface and the undercarriages (30) are guided on rails or tracks on both sides of the surface or at the longitudinal sides of the surface or at/on a boundary wall arranged along the surface.

7. The device (8) according to any one of the preceding claims, wherein a shield for preventing a lateral distribution of the material (10) is arranged on both sides of the axis (14) and the scoops (16), laterally at the device (8).

8. The device (8) according to any one of the preceding claims, wherein the device (8) comprises a means (28), in particular rotating about another axis (26), for scratching or scraping out the scoops (16) in order to free these from material (10) adhering therein.

9. The device (8) according to any one of the preceding claims, wherein the spacing between the floor (12) and the axis (14) can be changed and/or wherein the device (8) rests on the floor (12) by means of a spacer, which ensures a minimum spacing between the floor (12) and the scoops (16).

10. The device (8) according to any one of the preceding claims, wherein the device (8) is designed such that at least one uppermost scoop (16) in each case is accessible from above such that it can be filled with material (10).

11. A method for transporting material to be dried, partially dried material or dried material (10) by means of a transport device in a drying facility, in which the material (10) is placed on a floor (12) and spread out for drying, wherein the transport device has a rotatable axis (14) oriented substantially parallel to the floor (12), trough-like scoops (16) being arranged around and along the axis (14) such that the scoops (16) are moved around the axis (14) in a circle during rotation of the axis (14), wherein the transport device is arranged above the floor (12) so as to be displaceable in opposite movement directions (13, 19) such that, during displacement above the floor (12), the axis (14) is moved substantially parallel to the floor (12) and in one of the movement directions (13, 19) perpendicular to the axis (14), wherein the transport device comprises a drive device for rotating the axis (14) having the scoops (16) at an adjustable speed of rotation in one direction of rotation, wherein the floor (12) is formed by an elongated surface, wherein the material (10) is applied on a first of the shorter sides of the surface, is then transported along the surface by means of the transport device, and is discharged on a second of the shorter sides of the surface, wherein the axis (14) is always positioned with such spacing above the floor (12) that the scoops (16) engage into the material (10) during rotation of the axis (14),
- wherein the axis (14) is displaced in a first movement direction (13) in the direction of the second of the shorter sides and is thereby rotated in such a direction of rotation that at least one of the scoops (16) close to the floor moves in the first movement direction (13) and against the material (10), wherein the scoops (16), by the rotation thereof, engage into the material (10), pick up said material, transport this in the scoops (16) above the rotating axis (14) and then allow said material to fall out of the scoops (16) as the rotation continues in the direction of rotation, wherein the axis (14) is displaced in the first movement direction (13) to the extent that, as a result, the material (10) is unloaded from the scoops (16) closer to the second side than where said material was positioned when picked up in the respective scoop (16),
and
- wherein, as an alternative, the axis (14) is displaced in a second movement direction (19) that is opposite the first movement direction (13) and is rotated in the direction of rotation so rapidly that the scoops (16) engaging into the material (10) transport said material, underneath the axis (14) and beyond, in the direction of the second of the shorter sides and, optionally, sling said material in this direction without loading said material into the scoops (16),
wherein the transport device is a device (8) according to any one of claims 1 to 10.

12. The use of a device according to any one of claims 1 to 10, in order to purposely transport material to be dried, partially dried material or dried material (10) in a drying facility, in which the material (10) is placed on a floor (12) and spread out for drying, to any region of the floor (12),
- wherein the axis (14) is positioned with such spacing above the floor (12) that the scoops (16) engage into the material (10) during rotation of the axis (14), wherein the axis (14) is displaced in a movement direction (13) toward the material (10) to be transported and is thereby rotated in such a direction of rotation that at least one of the scoops (16) close to the floor moves in the movement direction (13) and against the material (10), wherein the scoop (16), by the rotation thereof, engages into the material (10) and picks this up, wherein the material (10) is lifted up in the scoop (16) by means of the rotation, wherein the axis (14) and, therefore, the scoop (16) are then held in such a position that the material (10) remains in the scoop (16), wherein the device (8) is then displaced to a position over the region of the floor (12) at which the axis (14) is then rotated such that the material (10) contained in the scoop (16) falls out of the scoop (16),
or
- wherein the material (10) is introduced from above into one of the scoops (16) and is held there, wherein the device (8) is then displaced to a position over the region of the floor (12) at which the axis (14) is then rotated such that the material (10) contained in the scoop (16) falls out of the scoop (16).

## Revendications

1. Dispositif (8) pour retourner, mélanger et transporter du produit à sécher, partiellement séché ou séché (10) dans une installation de séchage, dans laquelle le produit (10) à sécher est appliqué et étalé sur un sol (12), dans lequel le dispositif (8) présente un essieu rotatif (14) orienté essentiellement parallèlement au sol (12) autour duquel des pales en forme d'auge (16) sont disposées autour et le long de l'essieu (14) de sorte que les pales (16) sont déplacées lors d'une rotation de l'essieu (14) dans un cercle autour de l'essieu (14), dans lequel le dispositif (8) est disposé de manière à pouvoir être déplacé au-dessus du sol (12) dans des sens de déplacement opposés (13, 19) de sorte que l'essieu (14) est déplacé lors du déplacement au-dessus du sol (12) essentiellement parallèlement au sol (12) et dans un des sens de déplacement (13, 19) perpendiculairement à l'essieu (14), dans lequel le dispositif (8) présente un dispositif d'entraînement pour faire tourner l'essieu (14) avec les pales (16) à une vitesse de rotation réglable dans un sens de rotation, dans lequel les pales (16) présentent chacune une ouverture (17) limitée par des arêtes opposées (18), dans lequel les deux arêtes (18) sont formées par une paroi (20) s'étendant d'une des arêtes (18) à l'autre des arêtes (18) ou à chaque fois par une paroi (20) reliée à un fond de la pale, dans lequel deux droites (24) s'étendant chacune radialement par rapport à l'essieu et incluant un angle γ de 72° maximum peuvent être tirées dans une section transversale guidée perpendiculairement à l'essieu (14) et parallèlement aux sens de déplacement (13, 19) pour chacune des pales, dans lequel les droites (24) coïncident chacune sur des côtés opposés de la pale (16) indépendamment l'une de l'autre dans une section avec la paroi (20) ou une des parois (20), sont tangentes à la paroi (20) ou une des parois (20) sur un côté externe de la pale (16), coupent la paroi (20) ou une des parois (20), dans lequel un angle β entre les droites (24) et la paroi (20) ou une des parois (20) est inférieur à 15°, ou coupent la paroi (20) ou une des parois (20) en un point de retour d'une courbure de la paroi (20) ou d'une des parois (20), dans lequel la droite (24) et une autre droite (25) incluent un angle α dans le cas d'une partie (22) située derrière dans le sens de rotation de la paroi (20) ou dans le cas de la paroi (20) située derrière dans le sens de rotation, dans lequel l'autre droite (25) s'étend d'un point (22), au niveau duquel la droite (24) est tangente à ou coupe la paroi (20) ou au niveau duquel la section se termine sur un côté de la section plus proche de l'arête (18), dans lequel ce point (22) ne coïncide pas avec l'arête (18), à l'arête (18) la plus proche de ce point (22), dans lequel 0° < α ≤ 60°.

2. Dispositif (8) selon la revendication 1, dans lequel γ est de 60° maximum et/ou 0° < α ≤ 50° ou 0° < α ≤ 45°.

3. Dispositif (8) selon une des revendications précédentes, dans lequel l'arête (18) de la partie (22) située derrière dans le sens de rotation de la paroi (20) ou de la paroi (20) située derrière dans le sens de rotation forme dans la section transversale un élément de la pale (16) écarté le plus loin de l'essieu (14).

4. Dispositif (8) selon une des revendications précédentes, dans lequel le dispositif d'entraînement est réalisé de sorte qu'il permet une rotation sélective de l'essieu (14) dans le sens de rotation et un autre sens de rotation opposé.

5. Dispositif (8) selon une des revendications précédentes, dans lequel le dispositif (8) est guidé des deux côtés de l'essieu (14) dans à chaque fois un mécanisme de roulement (30).

6. Dispositif (8) selon la revendication 5, dans lequel le sol (12) est formé d'une surface essentiellement rectangulaire et les mécanismes de roulement (30) sont guidés sur des rails ou voies des deux côtés de ou sur les côtés longitudinaux de la surface ou à/sur un mur de limitation disposé le long de la surface.

7. Dispositif (8) selon une des revendications précédentes, dans lequel un panneau est respectivement disposé pour empêcher une répartition latérale du produit (10) des deux côtés de l'essieu (14) et des pales (16) latéralement au dispositif (8).

8. Dispositif (8) selon une des revendications précédentes, dans lequel le dispositif (8) présente un moyen (28) notamment rotatif autour d'un autre essieu (26), pour débourrer ou gratter les pales (16) pour libérer celles-ci de produit qui y adhère (10).

9. Dispositif (8) selon une des revendications précédentes, dans lequel l'écart entre le sol (12) et l'essieu (14) est variable et/ou dans lequel le dispositif (8) pèse sur le sol (12) au moyen d'un écarteur garantissant un écart minimal entre sol (12) et pales (16).

10. Dispositif (8) selon une des revendications précédentes, dans lequel le dispositif (8) est construit de sorte qu'au moins une pale à chaque fois la plus haute (16) est accessible du haut de sorte qu'elle peut être remplie de produit (10).

11. Procédé pour transporter du produit à sécher, partiellement séché ou séché (10) avec un dispositif de transport dans une installation de séchage, dans laquelle le produit (10) à sécher est appliqué et étalé sur un sol (12), dans lequel le dispositif de transport présente un essieu rotatif (14) orienté essentiellement parallèlement au sol (12) autour duquel des pales en forme d'auge (16) sont disposées autour et le long de l'essieu (14) de sorte que les pales (16) sont déplacées lors d'une rotation de l'essieu (14) dans un cercle autour de l'essieu (14), dans lequel le dispositif de transport est disposé de manière à pouvoir être déplacé au-dessus du sol (12) dans des sens de déplacement opposés (13, 19) de sorte que l'essieu (14) est déplacé lors du déplacement au-dessus du sol (12) essentiellement parallèlement au sol (12) et dans un des sens de déplacement (13, 19) perpendiculairement à l'essieu (14), dans lequel le dispositif de transport présente un dispositif d'entraînement pour faire tourner l'essieu (14) avec les pales (16) à une vitesse de rotation réglable dans un sens de rotation, dans lequel le fond (12) est formé par une surface oblongue, dans lequel le produit (10) est appliqué sur un premier des côtés plus courts de la surface, puis transporté le long de la surface au moyen du dispositif de transport et évacué sur un second des côtés plus courts de la surface, dans lequel l'essieu (14) est toujours positionné à un écart au-dessus du sol (12) tel que les pales (16) s'engrènent dans le produit (10) lors de la rotation de l'essieu (14),
- dans lequel l'essieu (14) est déplacé dans un premier sens de déplacement (13) en direction du second des côtés plus courts et tourné ce faisant dans un sens de rotation tel qu'au moins une pale proche du sol parmi les pales (16) se déplace dans le premier sens de déplacement (13) et à l'encontre du produit (10), dans lequel les pales (16) s'engrènent dans le produit (10) par la rotation, reçoivent celui-ci, le transportent dans les pales (16) au-dessus de l'essieu en rotation (14) en s'écartant, puis le laissent tomber des pales (16) lors de la rotation supplémentaire dans le sens de rotation, dans lequel l'essieu (14) est ce faisant déplacé dans le premier sens de déplacement (13) aussi loin que le produit (10) est ainsi déchargé des pales (16) plus près du second côté qu'il n'était positionné lors de la réception dans la pale respective (16),
et
- dans lequel l'essieu (14) est déplacé en variante dans un second sens de déplacement (19) opposé au premier sens de déplacement (13) et est ce faisant tourné dans le sens de rotation aussi vite que les pales (16) s'engrenant dans le produit (10) transportent celui-ci sous l'essieu (14) en le traversant en direction du second des côtés plus courts et le lancent en option dans ce sens sans le charger dans les pales (16),
dans lequel le dispositif de transport est un dispositif (8) selon une des revendications 1 à 10.

12. Utilisation d'un dispositif selon une des revendications 1 à 10 pour transporter du produit à sécher, partiellement séché ou séché (10) dans une installation de séchage, dans laquelle le produit (10) à sécher est appliqué et étalé sur un sol (12), de manière ciblée sur une région quelconque du sol (12),
- dans laquelle l'essieu (14) est positionné à un écart au-dessus du sol (12) tel que les pales (16) s'engrènent dans le produit (10) lors de la rotation de l'essieu (14), dans laquelle l'essieu (14) est déplacé dans un sens de déplacement (13) vers le produit à transporter (10) et tourné ce faisant dans un sens de rotation tel qu'au moins une pale proche du sol parmi les pales (16) se déplace dans le sens de déplacement (13) et à l'encontre du produit (10), dans laquelle la pale (16) s'engrène dans le produit (10) par la rotation et reçoit celui-ci, dans laquelle le produit (10) est soulevé dans la pale (16) par la rotation, dans laquelle l'essieu (14) et ainsi la pale (16) sont ensuite maintenus dans une position telle que le produit (10) reste dans la pale (16), dans laquelle le dispositif (8) est ensuite déplacé à une position au-dessus de la région du sol (12) au niveau de laquelle l'essieu (14) est ensuite tourné de sorte que le produit (10) contenu dans la pale (16) tombe de la pale (16),
ou
- dans laquelle le produit (10) est introduit du haut dans une des pales (16) et y est maintenu, dans laquelle le dispositif (8) est ensuite déplacé à une position au-dessus de la région du sol (12) au niveau de laquelle l'essieu (14) est ensuite tourné de sorte que le produit (10) contenu dans la pale (16) tombe de la pale (16).
